# EUROPEAN PATENT APPLICATION

(11) **EP 4 648 069 A1**
(43) Date of publication of application: **12.11.2025**
(21) Application number: 23917782.7
(22) Date of filing: 27.12.2023
(51) Int. Cl.: H01F 6/06

(54) **SUPERCONDUCTING COIL**

(30) Priority: 16.01.2023 JP 2023004278
(71) Applicant: FURUKAWA ELECTRIC CO., LTD., Tokyo 100-8322 (JP)
(72) Inventor: MUKOYAMA, SShinichi, Tokyo 100-8322 (JP); NEMOTO, Kaoru, Tokyo 100-8322 (JP); ISHIKAWA, Hiroki, Nagoya-shi, Aichi 450-6101 (JP)
(74) Representative: Winter, Brandl - Partnerschaft mbB
(86) International application number: PCT/JP2023/047044
(87) International publication number: WO 2024/154572

(57) **Abstract**

A superconducting coil according to the present invention comprises: a wound wire part which is obtained by winding a tape-like superconducting wire and an insulating tape together; and a resin part which covers at least the outer surface of the wound wire part. The superconducting wire comprises: a tape-like metal substrate; an intermediate layer that is provided on one main surface of the metal substrate; a superconducting layer that is provided on the surface of the intermediate layer; a protective layer that is provided on the surface of the superconducting layer; and a stabilization layer that covers the metal substrate, the intermediate layer, the superconducting layer and the protective layer. The insulating tape comprises a tape-like insulating base material. At least one main surface of the superconducting wire and one main surface of the insulating tape are each provided with a mold release layer, and the superconducting wire, the mold release layer, the insulating tape and the mold release layer are sequentially arranged in this order in the radial direction of the wound wire part.

## Description

### TECHNICAL FIELD

The present disclosure relates to a superconducting coil.

### BACKGROUND ART

With advancements in superconducting technology, superconducting application devices such as magnetic resonance imaging (MRI) systems, superconducting magnetic energy storage (SMES) systems, and single-crystal pulling apparatuses for metals have been put into practical use. These types of devices incorporate a superconducting coil formed by winding a superconducting wire. Furthermore, for such devices, the development of superconducting coils using high-temperature superconducting wires that exhibit excellent critical current characteristics under high magnetic fields is being actively pursued.

Generally, superconducting coils are often used in a state of being impregnated with resin. With such superconducting coils, tensile force (peeling force) acts in the laminating direction due to the difference in thermal contraction rates between the resin and the superconducting wire during cooling, which can cause interlayer peeling and cracking within the superconducting wire, thereby making it difficult to achieve stable superconducting characteristics.

In order to reduce the peeling force acting on the superconducting wire, for example, Patent Document 1 discloses a superconducting coil composed of a winding formed by co-winding a superconducting wire and a release material tape, the winding being impregnated with epoxy resin.

In the superconducting coil disclosed in Patent Document 1, when force is applied at the interface between the release material tape and the resin, the two components are easily separated, thereby suppressing the tensile stress applied to the superconducting wire itself. However, due to recent demands for improved superconducting performance, the superconducting coil disclosed in Patent Document 1 provides insufficient superconducting performance and leaves room for improvement.

### Citation List

### Patent Document

Patent Document 1: Japanese Unexamined Patent Application, Publication No. 2008-243588

### DISCLOSURE OF THE INVENTION

### Problems to be Solved by the Invention

It is an object of the present disclosure to provide a superconducting coil having excellent superconducting performance.

### Means for Solving the Problems

[1] A superconducting coil, including: a winding portion formed by co-winding a tape-shaped superconducting wire and an insulating tape; and a resin portion covering at least an outer surface of the winding portion, in which the superconducting wire includes: a tape-shaped metal substrate; an intermediate layer provided on one principal surface of the metal substrate; a superconducting layer provided on a surface of the intermediate layer; a protective layer provided on a surface of the superconducting layer; and a stabilizing layer covering the metal substrate, the intermediate layer, the superconducting layer, and the protective layer, the insulating tape includes a tape-shaped insulating base material, and a release layer is provided on at least one principal surface of the superconducting wire and one principal surface of the insulating tape, and the superconducting wire, the release layer, the insulating tape and the release layer are provided in this order in a radial direction of the winding portion.
[2] The superconducting coil as described in [1], in which the release layer is provided on both principal surfaces of the superconducting wire.
[3] The superconducting coil as described in [1] or [2], in which the release layer is provided on both principal surfaces of the insulating tape.
[4] The superconducting coil as described in any one of [1] to [3], in which the resin portion is provided between adjacent the superconducting wires in the radial direction of the winding portion.
[5] The superconducting coil as described in any one of [1] to [4], in which the insulating tape has a thickness of 50 µm or more.

### Effects of the Invention

According to the present disclosure, it is possible to provide a superconducting coil having excellent superconducting performance.

### BRIEF DESCRIPTION OF THE DRAWINGS

FIG. 1 is a perspective view illustrating an example of a superconducting coil according to an embodiment.
FIG. 2 is an example of a cross-sectional view taken along the line A-A in FIG. 1.
FIG. 3 is another example of a cross-sectional view taken along the line A-A in FIG. 1.
FIG. 4 is a perspective view illustrating another example of a superconducting coil according to an embodiment.
FIG. 5 is a graph illustrating results of an energization test on the superconducting coil of Example 1 and the superconducting coil of Comparative Example 1.

### PREFERRED MODE FOR CARRYING OUT THE INVENTION

Hereinafter, the embodiments will be described in detail.

As a result of extensive research, the inventors of the present invention have discovered the following. In order to manufacture a superconducting coil, when forming a winding portion by co-winding a tape-shaped superconducting wire and an insulating tape, a misalignment that the laminating state of the superconducting wire and the insulating tape in the winding portion misaligns along with a direction perpendicular to the laminating direction (hereinafter also simply referred to as "laminating misalignment") may occur, such that the principal surface of the superconducting wire may not be completely covered by the insulating tape. Consequently, by the subsequent impregnation process, resin impregnated into the winding portion may be formed in direct contact with the principal surface of the superconducting wire, leading to peeling of the superconducting wire. The inventors have found that, in a resin-impregnated superconducting coil, it is possible to improve the superconducting performance by both reducing the peeling force acting on the superconducting wire and preventing peeling caused by adhesion between the superconducting wire and the resin. The present disclosure has been completed based on such findings.

A superconducting coil according to an embodiment includes a winding portion formed by co-winding a tape-shaped superconducting wire and an insulating tape; and a resin portion covering at least an outer surface of the winding portion, in which the superconducting wire includes: a tape-shaped metal substrate; an intermediate layer provided on one principal surface of the metal substrate; a superconducting layer provided on a surface of the intermediate layer; a protective layer provided on a surface of the superconducting layer; and a stabilizing layer covering the metal substrate, the intermediate layer, the superconducting layer, and the protective layer, the insulating tape includes a tape-shaped insulating base material, and a release layer is provided on at least one principal surface of the superconducting wire and one principal surface of the insulating tape, and the superconducting wire, the release layer, the insulating tape, and the release layer are provided in this order in a radial direction of the winding portion.

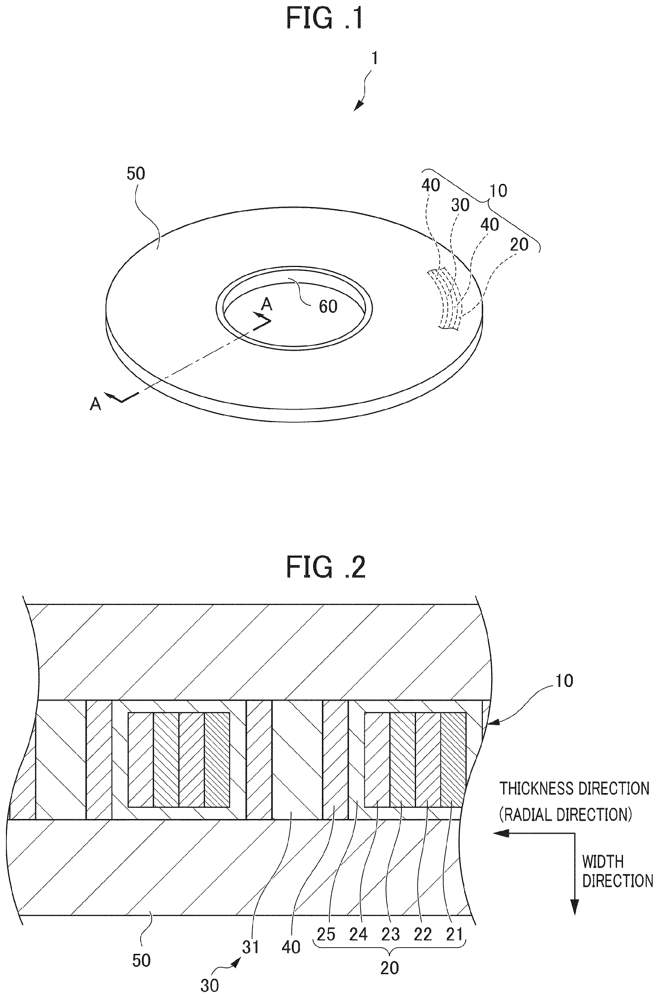

FIG. 1 is a perspective view illustrating an example of the superconducting coil according to an embodiment. FIG. 2 is an example of a cross-sectional view taken along the line A-A in FIG. 1. In FIG. 1, a portion of the resin portion 50 is illustrated as transparent for clarity in illustrating the structure of the winding portion 10. Also, in FIG. 2, the thickness of each member is exaggerated relative to the width thereof for ease of understanding the structure of the winding portion 10; however, in actual configurations, the thickness is very small relative to the width.

As illustrated in FIG. 1, a superconducting coil 1 includes a winding portion 10 and a resin portion 50. The winding portion 10 is formed by co-winding a tape-shaped superconducting wire 20 and an insulating tape 30. The resin portion 50 covers at least the outer surface of the winding portion 10. The superconducting coil 1 is a so-called pancake coil in which the superconducting wire 20 is wound in a plurality of layers around the outside of a winding core portion 60. In the radial direction of the winding core portion 60, the insulating tape 30 is interposed between adjacent superconducting wires 20. For example, the superconducting coil 1 is a high-temperature superconducting coil. The resin portion 50 is formed by impregnating the winding portion 10 with resin.

As illustrated in FIG. 2, the superconducting wire 20 constituting the winding portion 10 includes a metal substrate 21, an intermediate layer 22, a superconducting layer 23, a protective layer 24, and a stabilizing layer 25.

The metal substrate 21 forming the superconducting wire 20 is a tape-shaped metal substrate.

The intermediate layer 22 is provided on one principal surface of the metal substrate 21. The principal surface of the metal substrate 21 refers to a surface extending along the width direction of the metal substrate 21, which corresponds to the left and right surfaces thereof in FIG. 2.

The superconducting layer 23 is provided on the surface of the intermediate layer 22. The superconducting material constituting the superconducting layer 23 is preferably a RE-based superconductor (RE: rare earth element) exhibiting superconductivity at or above liquid nitrogen temperatures, and is more preferably an yttrium-based superconductor (Y-based superconductor) represented by the chemical formula YBa₂Cu₃O_{7-y}. The superconducting wire 20 is a high-temperature superconducting wire.

A protective layer 24 is provided on the surface of the superconducting layer 23. The protective layer 24 is a metal layer. In the superconducting wire 20, the metal substrate 21, the intermediate layer 22, the superconducting layer 23, and the protective layer 24 are laminated in this order to form a laminate.

A stabilizing layer 25 covers the entire surface of the metal substrate 21, and the intermediate layer 22, the superconducting layer 23 and the protective layer 24 which are provided on one side of the metal substrate 21. That is, the stabilizing layer 25 covers the entire periphery of the laminate composed by laminating the metal substrate 21, the intermediate layer 22, the superconducting layer 23, and the protective layer 24. The stabilizing layer 25 is a metal layer, and is preferably made of copper.

The insulating tape 30 constituting the winding portion 10 includes a tape-shaped insulating base material 31. The insulating base material 31 is preferably an insulating base material that is resistant to cracking and other damage at liquid nitrogen temperature, where superconductivity occurs, and is preferably made of polytetrafluoroethylene (PTFE), polyimide, NOMEX (registered trademark), polystyrene, or polyethylene that have releasability.

As illustrated in FIGS. 1 and 2, a release layer 40 is provided on at least one principal surface of the superconducting wire 20 and one principal surface of the insulating tape 30, and the superconducting wire 20, the release layer 40, the insulating tape 30 and the release layer 40 are provided in this order in the radial direction of the winding portion 10. Even if the laminating state of the superconducting wire 20 and the insulating tape 30 in the winding portion 10 is misaligned in the direction perpendicular to the laminating direction (i.e., the width direction in FIG. 2), the release layer 40 is provided on the surface of the superconducting wire 20. Therefore, even when the winding portion 10 is impregnated with resin, the tensile force that causes peeling of the superconducting wire 20 is reduced, and the peeling of the superconducting wire 20 can be suppressed. As a result, the superconducting performance of the superconducting coil 1 can be improved.

The release layer 40 is a layer having release properties, and is preferably composed of paraffin, silicone oil, grease, or Teflon (registered trademark). As a method for forming the release layer 40, applying a release agent, coating and baking a release agent, co-winding a release tape together with the superconducting wire 20 or the insulating tape 30, or laminating a release tape is preferable.

The release layer 40 may also be provided on the side surface of the superconducting wire 20 or the insulating tape 30. The side surface of the superconducting wire 20 or the insulating tape 30 refer to the surface along the thickness direction of the superconducting wire 20 or the insulating tape 30, which correspond to the upper and lower surfaces thereof in FIG. 2.

From the standpoint of further suppressing the peeling of the superconducting wire 20, it is preferable that the release layer 40 is provided on both principal surfaces of the superconducting wire 20. Moreover, the superconducting wire 20 including the release layer 40 on both principal surfaces thereof is easier to manufacture than the superconducting wire 20 including the release layer 40 on only one principal surface thereof, due to the ease of release treatment. Likewise, from the same standpoint, it is preferable that the release layer 40 is provided on both principal surfaces of the insulating tape 30. The insulating tape 30 including the release layers 40 on both principal surfaces thereof is also easier to manufacture for the same reason.

Furthermore, the inventors have discovered that, due to misalignment of the laminating state between the superconducting wire 20 and the insulating tape 30 in the winding portion 10, the stabilizing layers 25 of adjacent superconducting wires 20 may face each other without insulation. As a result, when an electric current flows through the superconducting coil 1, the generated outward electromagnetic force (hoop force) compresses the superconducting coil 1, causing the superconducting wires 20 to come into contact with each other. This contact can lead to conduction between the wires and result in heat generation due to the current. In addition, the proximity of the superconducting wires 20 may cause discharge or short-circuiting due to the voltage generated in the superconducting coil 1. It has thus been found that such phenomena may lead to degradation of the superconducting performance of the superconducting coil 1 and may even result in burnout of the superconducting coil 1.

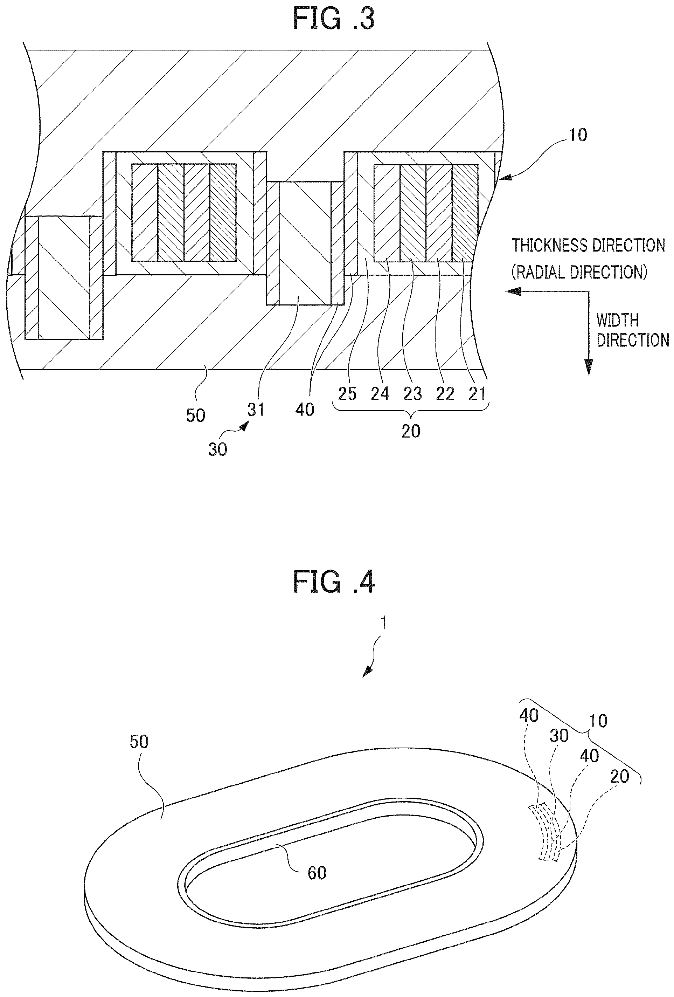

In order to address such problems, as illustrated in FIG. 3, it is preferable that, in the event of misalignment of the laminating state between the superconducting wire 20 and the insulating tape 30 in the winding portion 10, the resin portion 50 is provided also between adjacent superconducting wires 20 in the radial direction of the winding portion 10 (hereinafter also simply referred to as "between adjacent superconducting wires 20"). That is, it is preferable that the resin portion 50 is provided (in the gap) between adjacent superconducting wires 20 in the radial direction of the winding portion 10, where the insulating tape 30 is absent due to the misalignment of the laminating state between the superconducting wire 20 and the insulating tape 30.

By providing the resin portion 50 between adjacent superconducting wires 20 where misalignment of the laminating state has occurred between the superconducting wire 20 and the insulating tape 30, direct contact between adjacent superconducting wires 20 can be prevented. In addition, even when electromagnetic force is applied to the superconducting coil 1, the distance between adjacent superconducting wires 20 can be maintained without decreasing, thus preserving the necessary insulation distance. As a result, the electrical insulation performance of the superconducting coil 1 can be improved.

Further, the thickness of the insulating tape 30 is preferably 50 µm or more, more preferably 70 µm or more, and still more preferably 80 µm or more. When the thickness of the insulating tape 30 falls within the above range, sufficient electrical insulation between adjacent superconducting wires 20 can be secured. Also, when the thickness of the insulating tape 30 is within the above range, resin can be easily filled into the gap between adjacent superconducting wires 20 that are adjacent in the radial direction of the winding portion 10 during the resin impregnation process of the winding portion 10, in which misalignment of the laminating state has occurred between the superconducting wire 20 and the insulating tape 30. Thus, the resin portion 50 can be readily formed between adjacent superconducting wires 20. The thickness of the insulating tape 30 may be, for example, 250 µm or less.

Additionally, by resin-impregnating the winding portion 10 formed by winding the superconducting wire 20 and the insulating tape 30 around the winding core portion 60, it is possible to form the resin portion 50 that covers at least the outer surface of the winding portion 10. In the case where misalignment of the laminating state has occurred between the superconducting wire 20 and the insulating tape 30, the resin portion 50 is also filled between adjacent superconducting wires 20 in the radial direction of the winding portion 10.

Next, an example of a method of manufacturing the superconducting coil 1 according to the above embodiment will be described.

The release-treated insulating tape 30 is wound around the winding core portion 60, and simultaneously, the release-treated superconducting wire 20 is wound so as to overlap the insulating tape 30. Thereafter, the insulating tape 30 and the superconducting wire 20 are co-wound. In this manner, the winding portion 10 is formed in which the superconducting wire 20 and the insulating tape 30 are laminated in a plurality of layers in the radial direction. In order to suppress loosening of the superconducting wire 20 and the insulating tape 30 during winding, a tension of 0.5 kg or more is applied to the superconducting wire 20 and the insulating tape 30 during the winding process.

Moreover, by providing flanges at both ends of the winding core portion 60, it is possible to suppress laminating misalignment between the superconducting wire 20 and the insulating tape 30 due to partial dimensional variations in thickness of the superconducting wire 20 and the insulating tape 30, when winding the superconducting wire 20 and the insulating tape 30 onto the winding core portion 60. Furthermore, laminating misalignment or twisting of the superconducting wire 20 and the insulating tape 30 in the winding portion 10 can be suppressed by precisely adjusting the position between the winding core portion 60 and the guide rollers for feeding the superconducting wire 20 and the insulating tape 30.

Subsequently, the winding portion 10 is impregnated with resin to form the resin portion 50. In this manner, the superconducting coil 1 is manufactured. The resin portion 50 imparts sufficient strength to the superconducting coil 1 so that the winding portion 10 does not deform.

In the resin impregnation process of the winding portion 10, the winding portion 10 is placed inside an impregnation container capable of vacuum evacuation, and the pressure inside the impregnation container is vacuum-evacuated to 200 Pa or less using a vacuum pump. In the state where the pressure inside the impregnation container is 200 Pa, moisture inside the winding portion 10 evaporates, and gases and moisture present in the gaps and the like of the winding portion 10 can be sufficiently removed from the superconducting coil 1.

In this state, the air inside a resin container containing the injection resin is vacuum-evacuated to remove air from the resin (defoaming treatment). Then, the resin is returned to atmospheric pressure, and drawn into the impregnation container with a vacuum state through piping to fill the winding portion 10 with the resin. Since there is no air inside the winding portion 10, the resin spreads into the winding portion 10 without being disturbed by air. Furthermore, after sufficient impregnation with the resin, the impregnation container is returned to atmospheric pressure, thereby reducing the gas remaining in the superconducting coil 1 to a bubble size of 1 mm or less and enabling the resin to be completely filled into the superconducting coil 1 without gaps. Additionally, since excess resin does not adhere to the superconducting wire 20 and the insulating tape 30 which are release-treated, and even if the excess resin shrinks, such resin separates easily from the superconducting wire 20. As a result, the influence on each layer constituting the superconducting wire 20, such as the superconducting layer 23, can be suppressed.

Moreover, if misalignment of the laminating state has occurred between the superconducting wire 20 and the insulating tape 30 in the winding portion 10, the lid of the impregnation container can be closed before injecting the resin into the impregnation container, whereby the lid comes into contact with the winding portion 10, which is housed at the bottom of the impregnation container, from the width direction of the winding portion 10, whereby the superconducting wire 20 and the insulating tape 30 move in the width direction of the winding portion 10, whereby misalignment of the laminating state can be reduced or eliminated.

In this manner, by combining inexpensive materials that each excel in insulation performance and the ease of sliding of the superconducting wire 20 and the insulating tape 30, it is possible to resolve the problems associated with handling the superconducting wire 20 as a wire, such as poor insulation and lack of mechanical strength in the thickness direction. This achieves further cost reduction overall including cost reduction of the superconducting coil itself and simplification of the cooling mechanism by using the superconducting wire 20 as a high-temperature superconducting wire.

According to the embodiment described above, in a winding portion formed by co-winding a release-treated superconducting wire and insulating tape, the arrangement of the superconducting wire, the release layer, and the insulating tape in a predetermined order along the radial direction allows for suppressing the peeling of the superconducting wire, thereby allowing for providing a superconducting coil having excellent superconducting performance.

In the above description, FIG. 1 illustrates an example in which the superconducting wire 20 and the insulating tape 30 are wound around the annular winding core portion 60; however, as illustrated in FIG. 4, the superconducting wire 20 and the insulating tape 30 may also be wound around a racetrack-shaped winding core portion 60 including straight portions and arcuate portions.

While the embodiment has been described above, the present invention is not limited to the above embodiment, and includes all variations within the concept of the present disclosure and the scope of the claims, and various modifications may be made without departing from the scope of the present disclosure.

### EXAMPLES

Next, Examples and Comparative Examples will be described; however, the present disclosure is not limited to these Examples.

### (Example 1)

A winding portion was obtained by co-winding a release-treated superconducting wire and insulating tape on both principal surfaces, such that the superconducting wire, the release layer, the insulating tape, and the release layer were provided in this order along the radial direction. Subsequently, by impregnating the winding portion with resin, a resin portion was formed on at least the outer surface of the winding portion. In this manner, a superconducting coil was manufactured.

### (Comparative Example 1)

A winding portion was obtained by co-winding a superconducting wire and an insulating tape without any release treatment, such that the superconducting wire and the insulating tape were provided in this order along the radial direction. Subsequently, by impregnating the winding portion with resin, a resin portion was formed on at least the outer surface of the winding portion. In this manner, a superconducting coil was manufactured.

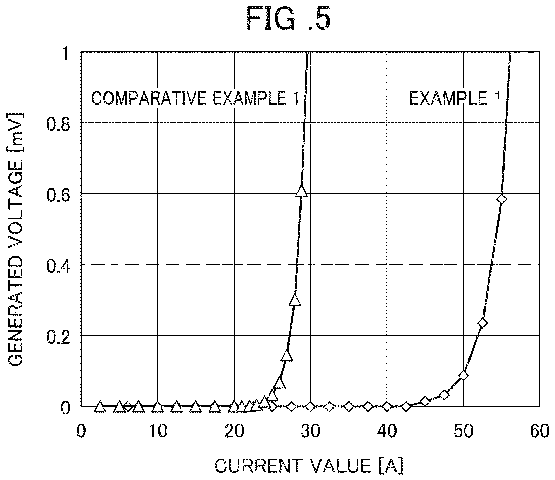

FIG. 5 is a graph illustrating the results of an energization test conducted on the superconducting coil of Example 1 and the superconducting coil of Comparative Example 1. In the energization test of the superconducting coil, the voltage generated at the superconducting coil was measured while increasing the current, and the superconducting state collapses at the point where the voltage is generated.

In Example 1, it was possible to apply a current up to a value comparable to the characteristics of the wound superconducting wire as designed in terms of material. In contrast, in Comparative Example 1, it was not possible to apply a current up to a value comparable to the characteristics of the wound superconducting wire, and the current was found to be reduced compared to Example 1. Further, upon disassembling the superconducting coil of Comparative Example 1 after the energization test, a portion was found where the insulating tape had misaligned from the laminate composed of the superconducting wire and the insulating tape. In this portion, peeling of the superconducting layer of the superconducting wire was confirmed.

### EXPLANATION OF REFERENCE NUMERALS

1: superconducting coil
10: winding portion
20: superconducting wire
21: metal substrate
22: intermediate layer
23: superconducting layer
24: protective layer
25: stabilizing layer
30: insulating tape
31: insulating base material
40: release layer
50: resin portion
60: winding core portion

## Claims

1. A superconducting coil, comprising:
a winding portion formed by co-winding a tape-shaped superconducting wire and an insulating tape; and
a resin portion covering at least an outer surface of the winding portion, wherein
the superconducting wire includes: a tape-shaped metal substrate; an intermediate layer provided on one principal surface of the metal substrate; a superconducting layer provided on a surface of the intermediate layer; a protective layer provided on a surface of the superconducting layer; and a stabilizing layer covering the metal substrate, the intermediate layer, the superconducting layer, and the protective layer,
the insulating tape includes a tape-shaped insulating base material, and
a release layer is provided on at least one principal surface of the superconducting wire and one principal surface of the insulating tape, and the superconducting wire, the release layer, the insulating tape and the release layer are provided in this order in a radial direction of the winding portion.

2. The superconducting coil according to claim 1, wherein the release layer is provided on both principal surfaces of the superconducting wire.

3. The superconducting coil according to claim 1, wherein the release layer is provided on both principal surfaces of the insulating tape.

4. The superconducting coil according to claim 1, wherein the resin portion is provided between adjacent the superconducting wires in the radial direction of the winding portion.

5. The superconducting coil according to any one of claims 1 to 4, wherein the insulating tape has a thickness of 50 µm or more.
